**Europäisches Patentamt**

**European Patent Office**

**Office européen des brevets**

(19)

(11) Veröffentlichungsnummer: **0 429 886 A2**

# EUROPÄISCHE PATENTANMELDUNG

(12)

(21) Anmeldenummer: 90121079.9

(22) Anmeldetag: 03.11.90

(51) Int. Cl.⁵: **C08J 3/07**, C08J 3/03, C09D 201/04, C09D 133/06, C09D 195/00, //C08L101:04, C08L33:06

(30) Priorität: 16.11.89 DE 3938063

(43) Veröffentlichungstag der Anmeldung: 05.06.91 Patentblatt 91/23

(84) Benannte Vertragsstaaten: AT BE CH DE ES FR GB IT LI NL SE Patentblatt

(71) Anmelder: **BAYER AG** **W-5090 Leverkusen 1 Bayerwerk(DE)**

(72) Erfinder: **Gruber, Hermann, Dr. Paul-Klee-Strasse 87 W-5090 Leverkusen 1(DE)** Erfinder: **Kubitza, Werner, Dr. Eduard-Spranger-Strasse 22 W-5090 Leverkusen 3(DE)**

(54) **Wässrige Polymerdispersionen, ein Verfahren zu ihrer Herstellung und ihre Verwendung zur Herstellung von Beschichtungsmitteln.**

(57) Wäßrige Polymerdispersionen mit einem Gehalt an organischen Lösungsmitteln von maximal 22 Gew.-% und einem Gehalt an dispergierten Polymeren von 30 bis 60 Gew.-%, wobei sich diese Polymeren 20 bis 80 Gew.-% aus chlorierten Polymerisaten und zu 80 bis 20 Gew.-% aus nichtchlorierten Polymerisaten zusammensetzen, ein Verfahren zur Herstellung von derartigen Dispersionen, indem man zunächst eine WO-Emulsion einer organischen Lösung des chlorierten Polymerisats herstellt und diese anschließend durch Vermischen mit einer wäßrigen Dispersion des Chlor-freien Polymerisats zu einer OW-Dispersion vereinigt, und die Verwendung derartiger wäßriger Dispersionen, insbesondere in Abmischung mit wäßrigen Bitumenemulsionen zur Herstellung von Beschichtungsmitteln für beliebige Substrate.

EP 0 429 886 A2

## WÄSSRIGE POLYMERDISPERSIONEN, EIN VERFAHREN ZU IHRER HERSTELLUNG UND IHRE VERWENDUNG ZUR HERSTELLUNG VON BESCHICHTUNGSMITTELN

Die Erfindung betrifft eine neue wäßrige Polymerdispersion, deren disperse Phase im wesentlichen aus einer Kombination aus A) bestimmten chlorhaltigen Polymerisaten und B) bestimmten chlorfreien Copolymerisaten olefinisch ungesättigter Monomerer besteht, ein Verfahren zur Herstellung derartiger Dispersionen und deren Verwendung zur Herstellung von Beschichtungsmitteln insbesondere für den Bauten- und Korrosionsschutz, gegebenenfalls in Kombination mit wäßrigen Bitumenemulsionen.

Chlorierte, natürliche oder synthetische Polymerisate wie beispielsweise chlorierter Naturkautschuk, chloriertes Polyethylen und durch Chlorierung von synthetischem Kautschuk (Homo- und Copolymerisate von Butadien und/oder Isopren) erhaltener Chlorkautschuk sind seit langem bekannt.

Die genannten chlorhaltigen Polymerisate werden für die unterschiedlichsten Einsatzgebiete wie z.B. zur Herstellung von Beschichtungsmitteln für die unterschiedlichsten Substrate, von Klebstoffen oder von Druckfarben verwendet. Die Verarbeitung der genannten Rohstoffe erfolgt im allgemeinen aus organischer Lösung, deren Viskosität mit steigendem Molekulargewicht der chlorierten Polymerisate jedoch stark ansteigen kann, so daß die Verarbeitung oftmals nur aus sehr verdünnten Lösungen (Losungsmittelanteil über 50 Gew.-%) erfolgen kann.

Eine Reduzierung des Anteiles organischer Lösemittel im Sinne einer erhöhten Umweltfreundlichkeit der zu verarbeitenden Endprodukte, insbesondere Lacke, ist praktisch nicht möglich. Auch der Verwendung niedrigerviskoser Chlorkautschuk-Typen sind sehr enge Grenzen gesetzt, da in der fertigen Zubereitung die Lösemittel-Einsparung minimal ist und darüber hinaus die Chlorkautschuk-Typen unterschiedlicher Viskositätsstufen sich durch zum Teil beträchtliche Unterschiede in der Eigenschaftssumme unterscheiden.

In organischen Lösemitteln gelöste, chlorhaltige Polymerisate, insbesondere in organischen Lösungsmitteln gelöste Chlorkautschuk-Typen können in Wasser emulgiert werden. Der Feststoff-Anteil der zu emulgierenden Lösung ist jedoch begrenzt, da mit zunehmender Konzentration auch eine zunehmende Einschränkung der Manipulierbarkeit aufgrund steigender Viskosität gegeben ist. Übersteigt z.B. die Viskosität einer Chlorkautschuk-Lösung in organischen Lösern den Bereich von ca. 8000 mPa.s, so wird eine weitere Verarbeitung bei Raumtemperatur auch im Sinne einer Wasseremulgierung erheblich erschwert oder sogar unmöglich gemacht.

Diesen Viskositätsbereich erreicht man z.B. bei Lösungen in Solventnaphtha mit einem Chlorkautschuk des durchschnittlichen Molekulargewichtes von ca. 60 000 - alle Angaben bezüglich des Molekulargewichts der chlorierten Polymerisate beziehen sich auf das mittlere, nach dem Interferrenz-Archibald-Verfahren mit Hilfe der Ultrazentrifuge bei 20 $^\circ$ C in 0,1 %iger Lösung ermittelte, als Gewichtsmittel Mw bestimmte Molekulargewicht - bei einer Feststoffkonzentration von 60 Gew.-% bei ca. 23 $^\circ$ C. Ein Chlorkautschuk des durchschnittlichen Molekulargewichtes von 85 000 erreicht diesen Viskositätsbereich bei Einstellung auf ca. 50 Gew.-% bei ca. 23 $^\circ$ C und ein Produkt mit durchschnittlichem Molekulargewicht von 135 000 muß bei einer Feststoff-Konzentration von 50 Gew.-% auf 60 bis 70 $^\circ$ C erwärmt werden, um durch Viskositätserniedrigung diesen für weitere Manipulationen erforderlichen Viskositätsbereich zu erreichen.

Wird eine 50 gew.-%ige Lösung eines Chlorkautschuks des mittleren Molekulargewichts 85 000 in Solventnaphtha 100 mit emulgatorhaltigem Wasser unter Anwendung von Scherkräften (z.B. Dissolver) gemischt, so bildet sich zunächst eine Emulsion, die in der äußeren Phase organophil, in der inneren Phase jedoch hydrophil ist. Das bedeutet, daß eine Wasserverdünnbarkeit ohne Anwendung von Scherkräften sowie die Reinigungsfähigkeit der Applikationsgeräte in Wasser nicht gegeben sind. Bei weiterem Zusatz von emulgatorhaltigem Wasser unter Anwendung von Scherkräften zu der genannten Wasser-in-Öl-Emulsion (WO-Emulsion) erreicht man schließlich eine Situation der Phasenumkehr der Emulsion, so das eine Ölin-Wasser-Emulsion (OW-Emulsion) resultiert. Je nach Chlorkautschuktyp, Art und Menge der Lösungsmittel und Anwendung der Scherkräfte liegt die Feststoff-Konzentration bei der Phasenumkehr im Bereich zwischen 20 und 30 Gew.-%. Dies bedeutet, das wäßrige OW-Emulsionen von Chlorkautschuk in Wasser maximal einen Feststoffgehalt von ca. 30 Gew.-% aufweisen können, was natürlich die Wirtschaftlichkeit von derartigen wäßrigen Emulsionen stark beeinträchtigt, da mindestens 70 % der Transport-und Lagerkosten zu Lasten des organischen Lösungsmittels und des Wassers gehen.

Aufgabe der Erfindung war somit, ein chlorierte Polymerisate enthaltendes, wäßriges Bindemittel zu entwickeln, welches wasserverdünnbar ist, maximal 22 Gew.-% an organischen Lösungsmitteln enthält und einen Feststoffgehalt von mindestens 30 Gew.-% aufweist.

Diese Aufgabe konnte mit der Bereitstellung des nachstehend näher beschriebenen erfindungsgemäßen Verfahrens und der dabei resultierenden wäßrigen Polymerdispersionen gelöst werden.

Gegenstand der Erfindung ist eine wäßrige Polymerdispersion mit einem Gehalt an organischen

EP 0 429 886 A2

Lösungsmitteln von maximal 22 Gew.-% und einem Gehalt an dispergierten Polymeren von 30 bis 60 Gew.-%, dadurch gekennzeichnet, daß die dispergierten Polymeren

A) zu 20 bis 80 Gew.-% aus chlorierten natürlichen oder synthetischen Polymerisaten mit einem Chlorgehalt von 60 bis 70 Gew.-% und

B) zu 80 bis 20 Gew.-% aus nicht-chlorierten Polymerisaten bestehen.

Gegenstand der Erfindung ist auch ein Verfahren zur Herstellung einer solchen wäßrigen Polymerdispersion, welches dadurch gekennzeichnet ist, daß man in einem ersten Schritt eine mindestens 50 gew.-%ige Lösung eines chlorierten, natürlichen oder synthetischen Polymerisats A) mit einem Chlorgehalt von 60 bis 70 Gew.-% in einem inerten Lösungsmittel unter Mitverwendung von externen Emulgatoren durch Vermischen mit Wasser zu einer Wasser-in-Öl-Emulsion vereinigt und diese in einem zweiten Schritt mit einer wäßrigen Dispersion von mindestens einem chlorfreien Polymerisat unter Bildung einer Öl-in-Wasser-Dispersion vereinigt, wobei Art und Mengenverhältnisse der einzelnen Komponenten so gewählt werden, daß die resultierende Dispersion einen Lösungsmittelgehalt von maximal 22 Gew.-% und einen Gehalt an dispergierten Polymeren von 30 bis 60 aufweisen, wobei die dispergierten Polymeren sich zu 20 bis 80 Gew.-% aus chlorhaltigen Polymerisaten A) und zu 80 bis 20 Gew.-% aus Chlor-freien Polymerisaten B) zusammensetzen.

Gegenstand der Erfindung ist schließlich auch die Verwendung der wäßrigen Polymerdispersionen zur Herstellung von Beschichtungsmitteln für beliebige Substrate.

Ausgangsmaterialien für das erfindungsgemäße Verfahren sind A) chlorierte Polymerisate und B) chlorfreie Polymerisate.

Bei den chlorierten Polymerisaten handelt es sich entweder um chlorierte Olefine insbesondere chloriertes Polyethylen mit einem Chlorgehalt von 60 bis 70 Gew.-% oder um Chlorkautschuk-Typen mit einem Chlorgehalt von 60 bis 70, vorzugsweise 64 bis 68 Gew.-% und einem mittleren Molekulargewicht von bis zu 185 000, vorzugsweise von 60 000 bis 185 000, insbesondere 60.000 bis 135.000. Der Begriff "Chlorkautschuk" soll dabei sowohl chlorierten Naturkautschuk als auch chlorierte Homo- und Copolymerisate des Butadiens und des Isoprens umfassen.

Bei den chlorfreien Polymerisaten B) handelt es sich insbesondere um "Polyacrylate", d.h. um Copolymerisate von mindestens einem Alkylester der Acryl- oder Methacrylsäure mit anderen olefinisch ungesättigten Monomeren wie z.B. Styrol, (Meth)acrylnitril, (Meth)acrylamid, Methacrylsäure, Acrylsäure und/oder zu Vernetzungsreaktionen befähigte Gruppierungen aufweisende Monomere wie z.B. N-Methoxymethyl(meth)acrylamid. Besonders bevorzugt sind Copolymerisate aus

a) 20 bis 50 Gew.-% Styrol,

b) 30 bis 70 Gew.-% mindestens eines $C_1$-$C_6$-Alkylesters der Acryl- oder Methacrylsäure,

c) 0 bis 10 Gew.-% Acrylsäure und/oder Methacrylsäure und

d) 0 bis 20 Gew.-% an anderen olefinisch ungesättigten Monomeren.

wobei sich die genannten Prozentsätze zu 100 ergänzen.

Im allgemeinen handelt es sich bei den chlorfreien Polymerisaten um durch radikalische Polymerisation hergestellte Copolymerisate, die beim erfindungsgemäßen Verfahren in Form von wäßrigen Dispersionen mit Feststoffgehalten von 30 bis 60 Gew.-% zum Einsatz gelangen. Die Carboxylgruppen der Copolymerisate liegen in den Dispersionen im allgemeinen in mit Aminen oder insbesondere in mit Ammoniak neutralisierter Form vor. Außerdem enthalten die Dispersionen im allgemeinen die üblichen Emulgatoren in Mengen von ca. 0,2 bis 2,0 Gew.-%. Gut geeignet als Komponente B) sind beispielsweise die von der Bayer AG, Leverkusen, unter der Bezeichnung ®Ercusol I60 bzw. ®Ercusol AS 250 vertriebenen wäßrigen Polymerisatdispersionen.

Als Hilfsmittel zur Durchführung des erfindungsgemäßen Verfahrens zu nennen sind außerdem

- inerte Lösungsmittel, vorzugsweise solche die gemäß Gefahrstoff-Verordnung nicht kennzeichnungspflichtig sind. Geeignete Lösungsmittel sind beispielsweise aromatische Kohlenwasserstoff-Lösungsmittel die unter der Bezeichnung "Solventnaphtha" im Handel erhältlich sind, Ester wie Ethyl- oder Butyl-acetat, Ketone wie Methylethylketon oder Methylisobutylketon oder beliebige Gemische derartiger Lösungsmittel.

- Weichmacher für die chlorhaltigen Polymerisate A) wie beispielsweise Adipinsäuredibutylester, Phthalsäuredibutylester, Phosphorsäuretributylester oder -trihexylester, Chlorparaffine oder als Homologengemische vorliegende und im Handel erhältliche $C_{10}$-$C_{14}$-Alkansulfon säurephenylester wie z.B. der von der Bayer AG, Leverkusen, unter der Bezeichnung ®Mesamoll vertriebene Weichmacher.

- Emulgatoren zur Herstellung einer WO-Emulsion der chlorierten Polymerisate wie beispielsweise Ethoxylierungsprodukte von substituierten Phenolen, beispielsweise von Isononylphenol oder von Bis-(phenylethyl)-phenol in denen pro Molekül 10 bis 50, vorzugsweise 10 bis 20 Ethylenoxideinheiten in Form von Polyetherketten vorliegen.

- Entschäumungsmittel wie beispielsweise "Entschäumer PA 49" der Bayer AG oder ®Foamex 1488 der

3

EP 0 429 886 A2

Th. Goldschmidt AG.

Die Durchführung der ersten Stufe des erfindungsgemäßen Verfahrens, d.h. die Herstellung der wäßrigen WO-Emulsion des chlorierten Polymerisats kann nach zwei Varianten erfolgen:

Gemäß einer ersten Variante wird eine möglichst hochkonzentrierte Lösung eines chlorierten Polymerisats der beispielhaft genannten Art, deren Lösungsmittelgehalt einer maximalen Viskosität bei 23°C von 10 000, vorzugsweise maximal 6000 mPa.s entspricht vorgelegt und gegebenenfalls mit Weichmachern, Emulgatoren oder anderen Additiven versetzt. Anschließend wird in die vorgelegte Dispersion unter intensivem Rühren vorzugsweise demineralisiertes Wasser geleitet, welchem gegebenenfalls eine zur Emulgierung des chlorierten Polymerisats ausreichende Menge eines Emulgators beigefügt wird, falls eine derartige Emulgatormenge nicht bereits vorab der organischen Lösung einverleibt worden warb Durch den gleichmäßigen Zulauf des Wassers unter Anwendung von Scherkräften entsteht eine WO-Emulsion. Der Wasserzulauf wird gestoppt, sobald der Feststoffgehalt der WO-Emulsion auf 30 bis 60 Gew.-%, vorzugsweise 40 bis 50 Gew.-% abgesunken ist.

Gemäß einer zweiten Variante der Durchführung der ersten Stufe wird eine Lösung eines chlorierten Polymerisats der beispielhaft genannten Art in einem inerten Lösungsmittel der beispielhaft genannten Art mit einem Feststoffgehalt von über 50 Gew.-%, vorzugsweise von mindestens 60 Gew.-% auf ca. 60 bis 80°C erwärmt und bei dieser Temperatur in Wasser emulgiert, wobei der zur Emulgierbarkeit erforderliche Emulgator zumindest einer der beiden Phasen vorab einverleibt worden ist. Bei dieser Variante entsteht zunächst eine OW-Emulsion und erst im weiteren Verlauf der Zuführung der Lösung des chlorierten Polymerisats, spätestens jedoch, wenn der gesamte Anteil der Lösung, deren Menge einem Feststoffgehalt der resultierenden WO-Emulsion von mindestens 30, vorzugsweise mindestens 40 Gew.-% entspricht, emulgiert ist, erfolgt die Phasenumkehrung nach WO.

Unabhängig von der Art der Herstellung der als Zwischenstufe anfallenden WO-Emulsion erfolgt deren anschließende Durchmischung mit der Polymerisatdispersion B), deren Wasseranteil die Phasenumkehrung von WO nach OW bewirkt, ohne daß der Feststoffanteil der resultierenden Dispersion wesentlich reduziert wird.

Bei der Durchführung des erfindungsgemäßen Verfahrens werden Art und Mengenverhältnisse der einzelnen Komponenten im übrigen so gewählt, daß der Lösungsmittelgehalt der resultierenden Dispersion bei maximal 22 Gew.-%, der Gehalt an dispergierten Polymeren A und B bei insgesamt 30 bis 60 Gew.-% liegt, wobei das Gewichtsverhältnis der Polymeren A) und B) bei 80:20 bis 20:80, vorzugsweise 60:40 bis 40:60 liegt.

Die auf diese Weise hergestellten erfindungsgemäßen Polymerdispersionen stellen ohne weitere Zusätze wertvolle Beschichtungsmittel für die unterschiedlichsten Substrate dar. Sie können jedoch auch mit den üblichen Hilfs- und Zusatzmitteln der Beschichtungstechnologie wie beispielsweise Pigmenten, Entschäumer, Pigmentverteiler, Verlaufhilfsmittel u.dgl. abgemischt und dann als Beschichtungsmittel eingesetzt werden. Besonders interessante Korrosionsschutzeigenschaften erhält man durch Abmischung mit Bitumenemulsionen, beispielsweise unter Einhaltung eines Gewichtsverhältnisses dispergierte Polymerisate: Bitumen von 0,5:1 bis 3:1. So zeigen Stahlplatten, die mit einer solchen Kombination aus einer erfindungsgemäßen Dispersion und einer Bitumenemulsion (Gewichtsverhältnis dispergierte Polymerisate : Bitumen = 1:1) beschichtet werden, nach 42-tägiger Salzsprühbelastung (3 % NaCl)O keinerlei sichtbare Veränderung.

Die nachfolgenden Beispiele dienen der weiteren Erläuterung der Erfindung.

Beispiele

In den nachfolgenden Beispielen 1 bis 6 werden folgende Ausgangsmaterialien eingesetzt:

Chlorkautschuk I:

Chlorierter Synthesekautschuk (Poly-1,4-cis-isopren), Molekulargewicht 85 000, Chlorgehalt: 66 Gew.-%

Chlorkautschuk II:

Chlorierter Synthesekautschuk (Poly-1,4-cis-isopren), Molekulargewicht 135 000, Chlorgehalt: 66 Gew.-%

Weichmacher:

Als Homologengemisch vorliegende $C_{10}$-$C_{14}$-Alkansulfonsäurephenylester

4

Emulgator:

Anlagerungsprodukt von 13 Mol Ethylenoxid an 1 Mol Bis-(1-phenylethyl)-phenol

Polymerisatdispersion I:

42 gew.-%ige Dispersion in Wasser eines Copolymerisats aus
37,8 Gew.-% Styrol
55,9 Gew.-% Acrylsäure-N-butylester
5,4 Gew.-% Methacrylsäure
0,9 Gew.-% N-Methoxymethylmethacrylamid
Die Herstellung erfolgt nach der in US-PS 2 978 432 dargelegten Verfahrensweise. Die Carboxylgruppen wurden mit Ammoniak neutralisiert.

Polymerisatdispersion II:

50 gew.-%ige wäßrige Dispersion eines Copolymerisats aus
53,5 Gew.-% Acrylsäure-n-butylester
5 Gew.-% Methacrylsäure
40,0 Gew.-% Styrol 1,5 Gew.-% N-Methoxymethylmethacrylamid.
Die Herstellung der Dispersion erfolgte nach der in US-PS 2 978 432 dargelegten Verfahrensweise. Die Carboxylgruppen wurden mit Ammoniak neutralisiert.

Entschäumer:

Handelsüblicher Entschäumer (®Foamex 1488 der Firma Th. Goldschmidt AG).

Solventnaphtha 100:

Handelsübliches Lösungsmittelgemisch, bestehend aus aromatischen, alkylsubstituierten Kohlenwasserstoffen

Beispiele 1 bis 2 (Tabelle 1)

Chlorkautschuk des angegebenen Molekulargewichts wird bei Raumtemperatur in Solventnaphtha gelöst, so daß eine 47,5 gew.-%ige Lösung entsteht. Anschließend wird, wo angegeben, Weichmacher eingerührt. Es werden nun die angegebenen Anteile an Emulgator und Entschäumer zugesetzt und homogenisiert. Nun läßt man unter Anwendung von Scherkräften (z.B. Dissolver) die angegebenen Mengen demineralisiertes Wasser langsam und gleichmäßig zulaufen. Es entsteht eine WO-Emulsion. Nach ausreichender Homogenisierung läßt man nun unter weiterem Rühren die Polymerisat-Dispersion, evtl. mit Zusatz an Emulgator und/oder Entschäumer zulaufen. Dabei erfolgt die Phasenumkehr von WO nach OW. Nach einer abschließenden Emulgierzeit von ca. 20 Minuten ist der Ansatz fertig. Der Teilchendurchmesser der dispersen Phase liegt bei maximal 500 nm. Die erhaltenen Dispersionen sind strukturviskos und weiß bis leicht gelblich gefärbt. Sie trocknen durch Verdunsten des Wassers und organischen Lösungsmittels zu einem hellen, durchscheinenden Film mit seidenmatter Oberfläche. Sie eignen sich hervorragend als wäßrige Bindemittel zur Herstellung von Beschichtungsmitteln auf Beton oder Stahl.

Beispiel 3 (Tabelle 1)

Dieses Beispiel unterscheidet sich von den Beispielen 1 bis 2 dadurch, daß der Lösungs- und Emulgierprozeß bei einer Temperatur von 60°C durchgeführt wurde. Dadurch konnte die Feststoff-Konzentration der Chlorkautschuk-Lösung auf 60 Gew.-% erhöht und der Anteil an organischem Löser auf 13 Gew.-% reduziert werden.

Beispiel 4 (Tabelle 1)

Dieses Beispiel unterscheidet sich von den Beispielen 1 und 2 dadurch, daß bei 60°C der Löse- und Emulgierprozeß erfolgte, so daß eine höhermolekulare und somit höherviskose Chlorkautschuk-Type ver-

5

wendet werden konnte.

Tabelle 1

| Formulierungen der Beispiele 1 bis 4 (Gewichtsteile) | | | | |
|---|---|---|---|---|
| | 1 | 2 | 3 | 4 |
| Chlorkautschuk I | 195,4 | 195,4 | 195,5 | |
| Chlorkautschuk II | | | | 195,4 |
| Solventnaphtha 100 | 216,0 | 216,2 | 130,1 | 216,0 |
| Gew.-Teile | 411,4 | 411,8 | 325,6 | 411,4 |
| % Feststoff | 47,5 | 47,5 | 60,0 | 47,5 |
| Arbeitstemperatur °C | 23 | 23 | 60 | 60 |
| Weichmacher | 39,2 | - | 39,3 | 39,2 |
| Emulgator | 22,5 | 19,6 | 22,5 | 22,5 |
| Entschäumer | 2,9 | 2,9 | - | 2,9 |
| Einemulgierung von demineralisierten Wasser | 55,9 | 78,3 | 145,6 | 55,9 |
| Entschäumer | | | 1,9 | |
| Nach Homogenisierung weiteres Einemulgieren der Mischung | | | | |
| Polymerisatdispersion I | 465,2 | 464,9 | 465,1 | 465,2 |
| Emulgator | | 19,6 | | |
| Entschäumer | 2,9 | 2,9 | | 2,9 |
| | 1000,0 | 1000,0 | 1000,0 | 1000,0 |
| Festkörper Gew.-% | 45,4 | 43,2 | 45,4 | 45,4 |
| Lösungsmittel Gew.-% | 21,6 | 21,6 | 13,0 | 21,6 |
| Wasser Gew.-% | 33,0 | 35,2 | 41,6 | 33,0 |

Beispiele 5 und 6 (Tabelle 2)

Diese unterscheiden sich von den bisherigen Beispielen dadurch, daß die Chlorkautschuk-Lösung auf einen Feststoffgehalt von 60 Gew.-% eingestellt und bei 80 °C gelöst und auch weiterverarbeitet wurde. Während in den vorhergehenden Beispielen zunächst durch Einrühren von Wasser eine WO-Emulsion hergestellt wurde, die nach Zugabe der Polyacrylat-Dispersion in die OW-Phase umkehrte, wird nun die erhitzte und somit in der Viskosität reduzierte Chlorkautschuk-Lösung in einer wäßrigen Emulgatorlösung zunächst zu einer OW-Emulsion emulgiert. Sie kehrt jedoch noch während des Zulaufes in eine WO-Emulsion um. Eine erneute Phasenumkehr nach OW erfolgt dann bei Zulauf der Polymerisat-Dispersion. Durch dieses Verfahren erhält man Zubereitungen mit höherem Festkörpergehalt sowie reduzierten Mengen organische Löser.

Tabelle 2

| Formulierung der Beispiele 5 und 6 (Gewichtsteile) | | |
|---|---|---|
| | 5 | 6 |
| Chlorkautschuk I | 212,0 | 231,3 |
| Solventnaphtha 100 | 141,0 | 153,8 |
| Gew.-Teile | 353,0 | 385,1 |
| Gew.-% Feststoff | 60,0 | 60,0 |
| Arbeitstemperatur °C | 80 | 80 |
| Weichmacher | 42,8 | 46,7 |
| Emulgator | 24,3 | 26,5 |
| Einemulgieren von demineralisiertem Wasser | 60,4 | 65,9 |
| Nach Homogenisieren weiteres Einemulgieren von | | |
| Polymerisatdispersion I | 519,5 | - |
| Polymerisatdispersion II | | 475,8 |
| | 1000,0 | 1000,0 |
| Festkörper Gew.-% | 49,7 | 54,2 |
| Lösungsmittel Gew.-% | 14,1 | 15,4 |
| Wasser Gew.-% | 36,2 | 30,4 |

Verwendungsbeispiele

In den nachstehenden Verwendungsbeispielen werden die Dispersionen gemäß Beispielen 1 bis 6 mit einer Pigmentschlämme und den anderen, in nachstehender Tabelle 3 zusammengestellten Ausgangsmaterialien zu gebrauchsfertigen Beschichtungsmitteln formulierte.

| Die Pigmentschlämme besteht aus einer Mischung aus | |
|---|---|
| 95,23 Gew.-Teile | Pigmentverteiler A, 3 %ig in dem. Wasser (Handelsprodukt der BASF AG, Ludwigshafen) |
| 133,34 Gew.-Teile | Wasser |
| 791,90 Gew.-Teile | Titandioxid Rutil |
| 9,53 Gew.-Teile | Entschäumer (®Foamex 1488) |
| 100,00 Gew.-Teile | |

7

Tabelle 3

| (Zusammensetzung von Beschichtungsmitteln, Mengenangaben in Gewichtsteilen) | | | | | | |
|---|---|---|---|---|---|---|
| | Produkte gemäß Beispiel | | | | | |
| | 1 | 2 | 3 | 4 | 5 | 6 |
| Pigmentschlämme | 1000 | 1000 | 1000 | 1000 | 1000 | 1000 |
| Foamex 1488 | 2,8 | 2,8 | 2,8 | 2,8 | 2,8 | 2,8 |
| ®Acrysol RM 8* | 33,8 | 33,8 | 33,8 | 33,8 | 33,8 | 33,8 |
| Wasser | | | | | 154,0 | 288,0 |
| Dispersion | 1773 | 1773 | 1773 | 1773 | 1619 | 1485 |
| | 2809,6 | 2809,6 | 2809,6 | 2809,6 | 2809,6 | 2809,6 |

* Verdicker der Firma Rohm + Haas, 10 %ig in Wasser

Zusammensetzung der so erhaltenen Beschichtungsmittel (Tabelle 4)

Tabelle 4

| (Mengenangaben in Gew.-%) | | | | | | |
|---|---|---|---|---|---|---|
| | 1 | 2 | 3 | 4 | 5 | 6 |
| Bindemittel | | | | | | |
| einschl. Additive | 29,0 | 27,6 | 29,0 | 29,0 | 29,0 | 29,0 |
| Pigment | 27,1 | 27,1 | 27,1 | 27,1 | 27,1 | 27,1 |
| Gesamt-Festkörper | 56,1 | 54,7 | 56,1 | 56,1 | 56,1 | 56,1 |
| org. Lösungsmittel | 13,6 | 13,6 | 8,2 | 13,6 | 8,1 | 8,1 |
| Wasser | 30,3 | 31,7 | 35,7 | 30,3 | 35,8 | 35,8 |
| | 100,0 | 100,0 | 100,0 | 100,0 | 100,0 | 100,0 |

Alle so hergestellten Beschichtungsmittel zeigen strukturviskoses Verhalten. Sie trocknen durch Verdunsten des Wassers und der Restmenge organischen Lösemittels mit homogener, seidenmatter Oberfläche. Sie haften sehr gut u.a. auf Stahl, Beton und Leichtbauplatten. Sie zeigten bei Kurzprüfungen im Salzsprühtest gutes Korrosionsschutz-Verhalten. Das gute Resultat nach 2000-stündiger Schnellbewitterungsprüfung im Wather-o-meter Xeno 1200 läßt auf exzellentes Verhalten in der Freibewitterung schließen.

**Ansprüche**

1. Wäßrige Polymerdispersion mit einem Gehalt an organischen Lösungsmitteln von maximal 22 Gew.-% und einem Gehalt an dispergierten Polymeren von 30 bis 60 Gew.-%, dadurch gekennzeichnet, daß die dispergierten Polymeren
    A) zu 20 bis 80 Gew.-% aus chlorierten natürlichen oder synthetischen Polymerisaten mit einem Chlorgehalt von 60 bis 70 Gew.-% und
    B) zu 80 bis 20 Gew.-% aus nicht-chlorierten Polymerisaten bestehen.
2. Wäßrige Polymerdispersion gemäß Anspruch 1, dadurch gekennzeichnet, daß die Komponente A) aus Chlorkautschuk mit einem Molekulargewicht Mw von 60.000 bis 185.000 und einem Chlorgehalt von 60 bis 70 Gew.-% besteht.
3. Wäßrige Polymerdispersion gemäß Anspruch 1 und 2, dadurch gekennzeichnet, daß die Komponente B) aus mindestens einem Copolymerisat aus
a) 20 bis 50 Gew.-% Styrol,
b) 30 bis 70 Gew.-% mindestens eines $C_1$-$C_6$-Alkylesters der Acryl- oder Methacrylsäure,

8

c) 0 bis 10 Gew.-% Methacrylsäure und/oder Acrylsäure und

d) 0 bis 20 Gew.-% anderen Monomeren

besteht, wobei sich die genannten Prozentsätze zu 100 ergänzen.

4. Verfahren zur Herstellung von Polymerdispersionen gemäß Anspruch 1 bis 3, dadurch gekennzeichnet, daß man in einem ersten Schritt eine mindestens 50 gew.-%ige Lösung eines chlorierten, natürlichen oder synthetischen Polymerisats A) mit einem Chlorgehalt von 60 bis 70 Gew.-% in einem inerten Lösungsmittel unter Mitverwendung von externen Emulgaturen durch Vermischen mit Wasser zu einer Wasser-in-Öl-Emulsion vereinigt und diese in einem zweiten Schritt mit einer wäßrigen Dispersion von mindestens einem chlorfreien Polymerisat unter Bildung einer Öl-in-Wasser-Dispersion vereinigt, wobei Art und Mengenverhältnisse der einzelnen Komponenten so gewählt werden, daß die resultierende Dispersion einen Lösungsmittelgehalt von maximal 22 Gew.-% und einen Gehalt an dispergierten Polymeren von 30 bis 60 Gew.-% aufweisen, wobei die dispergierten Polymeren sich zu 20 bis 80 Gew.-% aus chlorhaltigen Polymerisaten A) und zu 80 bis 20 Gew.-% an chlor-freien Polymerisaten B) zusammensetzen.

5. Verfahren gemäß Anspruch 4, dadurch gekennzeichnet, daß die Komponente A) aus Chlorkautschuk mit einem Molekulargewicht Mw von 60.000 bis 185.000 und einem Chlorgehalt von 60 bis 70 Gew.-% besteht.

6. Verfahren gemäß Anspruch 1 und 2, dadurch gekennzeichnet, daß die Komponente B) aus mindestens einem Copolymerisat aus

a) 20 bis 50 Gew.-% Styrol,

b) 30 bis 70 Gew.-% mindestens eines $C_1$-$C_6$-Alkylesters der Acryl- oder Methacrylsäure,

c) 0 bis 10 Gew.-% Methacrylsäure und/oder Acrylsäure und

d) 0 bis 20 Gew.-% anderen Monomeren

besteht, wobei sich die genannten Prozentsätze zu 100 ergänzen.

7. Verwendung der wäßrigen Polymerdispersionen gemäß Anspruch 1 bis 3 als oder zur Herstellung von Beschichtungsmitteln für beliebige Substrate.

8. Verwendung gemäß Anspruch 7, dadurch gekennzeichnet, daß die wäßrigen Polymerdispersionen in Abmischung mit wäßrigen Bitumenemulsionen, sowie gegebenenfalls in Abmischung mit weiteren Hilfs- und Zusatzmitteln der Beschichtungstechnologie zum Einsatz gelangen.